# EUROPEAN PATENT APPLICATION

(11) **EP 4 293 755 A1**
(43) Date of publication of application: **20.12.2023**
(21) Application number: 22923123.8
(22) Date of filing: 16.05.2022
(51) Int. Cl.: H01M 4/62, H01M 4/13

(54) **NEGATIVE ELECTRODE SHEET, SECONDARY BATTERY, BATTERY MODULE, BATTERY PACK, AND ELECTRICAL DEVICE**

(30) Priority: 27.01.2022 CN 202210099624
(71) Applicant: Contemporary Amperex Technology Co., Limited, Ningde, Fujian 352100 (CN)
(72) Inventor: DENG, Kaiming, Ningde, Fujian 352100 (CN); LU, Lei, Ningde, Fujian 352100 (CN); WANG, Yalong, Ningde, Fujian 352100 (CN); JIA, Hai, Ningde, Fujian 352100 (CN); DAI, Shunhao, Ningde, Fujian 352100 (CN)
(74) Representative: Gong, Jinping
(86) International application number: PCT/CN2022/093124
(87) International publication number: WO 2023/142308

(57) **Abstract**

Embodiments of the present application provide a negative electrode plate, a secondary battery, a battery module, a battery pack and an electrical device. The negative electrode plate, comprises a negative electrode current collector; and a negative electrode active material layer, wherein the negative electrode active material layer is disposed on at least one surface of the negative electrode current collector, and comprises, based on total weight of the negative electrode active material layer, 90.0% to 98.6% by weight of a negative electrode active material; 1.0% - 5.0% by weight of a polymer binder; and 0.2%-4.0% by weight of a toughening fiber. The negative electrode plate is able to improve energy density of secondary batteries while having better flexibility.

## Description

### CROSS REFERENCE TO RELATED APPLICATION

This application claims priority to the Chinese Patent Application No. 202210099624.8 entitled "NEGATIVE ELECTRODE PLATE, SECONDARY BATTERY, BATTERY MODULE, BATTERY PACK AND ELECTRICAL DEVICE" and filed on January 27, 2022, which is incorporated herein by reference in its entirety.

### TECHNICAL FIELD

The present application belongs to the technical field of secondary battery, in particular to a negative electrode plate, a secondary battery, a battery module, a battery pack and an electrical device.

### BACKGROUND

In recent years, with the rapid development of new energy vehicles, energy storage, communications and other fields, the demand for high-capacity secondary batteries has been promoted, and higher requirements for energy density of secondary batteries have been proposed in these fields.

At present, battery cores in secondary batteries are mainly made by stacking and winding processes. The above processes require electrode plates of the battery cores to have good flexibility, and the electrode plates that are highly susceptible to cracking when bending will lead to failure of the battery cores. Therefore, it is urgent to improve flexibility of electrode plates of the battery cores while improving energy density of secondary batteries.

### SUMMARY

The present application provides a negative electrode plate, a secondary battery, a battery module, a battery pack and an electrical device and the negative electrode plate can improve energy density of secondary batteries while having better flexibility.

A first aspect of the present application provides a negative electrode plate, comprising
a negative electrode current collector;
a negative electrode active substance layer, provided on at least one surface of said negative electrode current collector, said negative electrode active substance layer comprising, based on the total weight of said negative electrode active material layer,
90.0% to 98.6% by weight of a negative electrode active material;
1.0% - 5.0% by weight of a polymer binder; and
0.2%-4.0% by weight of a toughening fiber.

In the above embodiment, on the one hand, an appropriate amount of polymer binder contained in the negative electrode active material layer has good adhesion and can effectively lock the negative electrode active material to enhance strength of the negative electrode plate. On the other hand, the negative electrode active material layer contains an appropriate amount of polymer binder and an appropriate amount of toughening fiber, which are synergistic with each other to reduce cracking of the negative electrode plate, thus achieving the effect of improving flexibility of the negative electrode plate. At the same time, the negative electrode active material layer of the negative electrode plate contains an appropriate amount of toughening fiber and an appropriate amount of polymer binder, which can make secondary batteries have a lower battery impedance, thus achieving the effect of improving energy density of the secondary batteries.

In some embodiments of the present application, said polymer binder has a three-dimensional cross-linked network structure. The polymer binder with the three-dimensional cross-linked network structure has a better bonding property, which allows it to lock the negative electrode active material more effectively so that strength of the negative electrode plate is enhanced. In addition, the three-dimensional cross-linked network structure of the polymer binder can better synergize with the toughening fiber to further reduce cracking of the negative electrode plate, thus enabling the negative electrode plate to have good flexibility.

In some embodiments of the present application, said polymer binder is a copolymer containing a plurality of polar functional groups. The polar functional groups may interact with each other to form hydrogen bonds, resulting in a three-dimensional cross-linked network structure within the polymer binder. And the formation of hydrogen bonds can help the polymer binder reduce cracking of the negative electrode plate, thereby enhancing flexibility of the negative electrode plate.

In some embodiments of the present application, said polar functional groups comprise at least one of a carboxyl group, a cyano group, an amide group, an amino group, and a hydroxyl group. Hydrogen bonds are easily formed between the above polar functional groups, which in turn makes it easier to form a three-dimensional cross-linked network structure within the polymer binder, so that cracking of the negative electrode plate is reduced and flexibility of the negative electrode plate is enhanced.

In some embodiments of the present application, said copolymer has a weight average molecular weight of greater than or equal to 300,000. The weight average molecular weight of the copolymer is within the above range, which can help to enhance performances of the polymer binder, such as strength, tensile strength, and bonding force of the three-dimensional cross-linked network structure.

In some embodiments of the present application, said copolymer is selected from at least one of polyacrylic acid-acrylonitrile copolymer and derivatives thereof, acrylic acid-acrylamide copolymer and derivatives thereof, and acrylic acid-acrylates copolymer. The carboxyl group and cyano group in the polyacrylate-acrylonitrile copolymer and the carboxyl groups in the acrylic acid-acrylates copolymer can form hydrogen bonds between them, and the formed strong intermolecular force can effectively improve cracking of the negative electrode plate and achieve the effect of improving flexibility of the negative electrode plate.

In some embodiments of the present application, said toughening fiber has a diameter in the range of 0.1 µm-50 µm, and a length-to-diameter ratio of greater than or equal to 20. The diameter of the toughening fiber is within the above-mentioned range, which is conducive to improving flexibility of the negative electrode plate. At the same time, the length-to-diameter ratio of the toughening fiber is greater than or equal to 20, which can also further enhance flexibility of the negative electrode plate.

In some embodiments of the present application, said toughening fiber is selected from at least one of aramid fibers, plastic fibers, and carbon fibers. These fibers can better synergize with the polymer binder to reduce cracking of the negative electrode plate so as to enable the negative electrode plate to have good flexibility.

In some embodiments of the present application, said plastic fiber is one or more selected from polyimide fibers, polyphenylene sulfide fibers, poly(p-phenylene benzobisoxazole) fibers, and ultra-high molecular weight polyethylene fibers; and said carbon fiber is one or more selected from polyacrylonitrile-based carbon fibers, asphalt-based carbon fibers, and viscose based carbon fibers. These fibers can better synergize with the polymer binder to reduce cracking of the negative electrode plate so as to enable the negative electrode plate to have good flexibility.

A second aspect of the present application provides a secondary battery, comprising
a positive electrode plate;
a negative electrode plate, the negative electrode plate is the negative electrode plate as described in any one of the above mentioned embodiment;
a separator, disposed between the positive electrode plate and the negative electrode plate; and;
an electrolyte.

In the above embodiment, the secondary battery comprises a negative electrode plate in the above embodiment, and by reasonably selecting components and their contents in the negative electrode active material layer is able to enhance not only flexibility of the negative electrode plate but also energy density of the secondary battery. Thus, the secondary battery has better strength as well as higher energy density.

A third aspect of the present application further provides a battery module, said battery module comprising the secondary battery described in the above embodiment.

In the above embodiment, the battery module comprises the secondary battery as described in the above embodiment and thus has a higher energy density.

A fourth aspect of the present application further provides a battery pack, said battery pack comprising the battery module as described in the above embodiment.

In the above embodiment, the battery pack comprises the battery module as described in the above embodiment and thus has a higher energy density.

A fifth aspect of the present application further provides an electrical device, said electrical device comprising the secondary battery described in any of the above embodiments, the battery module described in the above embodiment, or the battery pack described in the above embodiment.

In the above-described embodiment, the electrical device comprises the secondary battery of the above embodiment, the battery module of the above embodiment, or the battery pack of the above embodiment, and thus the electrical device has a long range.

### DESCRIPTION OF THE DRAWINGS

In order to explain the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
FIG. 1 is a schematic diagram of structure of the negative electrode plate according to some embodiments of the present application;
FIG. 2 is a schematic diagram of structure of the negative electrode plate according to another embodiment of the present application;
FIG. 3 is a diagram of interaction mechanism between carboxyl group and cyano group in the polyacrylic acid-acrylonitrile copolymer contained in the negative electrode active material layer according to some embodiments of the present application;
FIG. 4 is a diagram of interaction mechanism between carboxyl groups in the acrylic acid-acrylonitrile copolymer contained in the negative electrode active material layer according to some embodiments of the present application;
FIG. 5 is a schematic diagram of the negative electrode plate according to some embodiments of the present application that is wound and affixed to a rolled needle;
FIG. 6 is a schematic diagram of the negative electrode plate according to some embodiments of the present application that is wound and affixed to a rolled needle;
FIG. 7 is a schematic diagram of a film layer formed from the negative electrode active material layer of some embodiments of the present application by folding in half;
FIG. 8 is a schematic diagram of the secondary battery according to some embodiments of the present application;
FIG. 9 is an exploded view of the secondary battery according to some embodiments of the present application shown in FIG. 5;
FIG. 10 is a schematic diagram of the battery module according to some embodiments of the present application;
FIG. 11 is a schematic view of the battery pack according to some embodiments of the present application;
FIG. 12 is an exploded view of the battery pack according to some embodiments of the present application shown in FIG. 11; and
FIG. 13 is a schematic diagram of the electrical device with the secondary battery according to some embodiments of the present application as a power source of.

In the drawings, the accompanying drawings are not drawn to an actual scale.

The reference sings in the accompanying drawings are illustrated as follows:

- 1: - secondary battery;
- 10: - negative electrode plate;
- 11: - negative electrode current collector;
- 111: - first surface;
- 112: - second surface;
- 12: - negative electrode active material layer;
- 21: - housing;
- 22: -electrode assembly;
- 23: - cover plate;
- 2: - battery module;
- 3: - battery pack;
- 31: - upper case; and
- 32: -lower case.

### DETAILED DESCRIPTION

Embodiments of the present application will be described in detail below in connection with the accompanying drawings. The following embodiments are intended only to illustrate more clearly the embodiments of the present application, and are therefore intended only as examples instead of limiting the protection scope of the present application.

Unless otherwise defined, all technical and scientific terms used herein have the same meaning as commonly understood by those skilled in the art belonging to the present application; the terms used herein are for the purpose of describing specific embodiments only and are not intended to limit the present application; the terms "comprise", "comprising", "has/have" and "having" in the specification and claims of the present application and in the accompanying description above, and any variations thereof, are intended to encompass non-exclusive inclusion.

In the description of embodiments of the present application, the technical terms "first", "second", etc. are used only to distinguish between different objects and are not to be understood as indicating or implying relative importance or implicitly specifying the number, particular order or priority of the indicated technical features. In the description of embodiments of the present application, "plurality" means more than two, unless otherwise expressly and specifically limited.

References herein to "embodiments" mean that a particular feature, structure, or characteristic described in connection with an embodiment may be included in at least one embodiment of the present application. The occurrence of the phrase at various points in the specification does not necessarily mean the same embodiment, nor does it mean a separate or alternative embodiment that is mutually exclusive with other embodiments. It is understood, both explicitly and implicitly, by those of skill in the art that the embodiments described herein may be combined with other embodiments.

In the description of embodiments of the present application, the term "and/or" is simply a description of an associated relationship of associated objects, indicating that three relationships may exist. For example, A and/or B, may indicate: A alone, both A and B, and B alone. In addition, the character "/" herein generally indicates that the associated object before and after is an "or" relationship.

In the description of embodiments of the present application, the term "plurality" refers to more than two including two.

The present application provides a secondary battery, comprising a positive electrode plate, a negative electrode plate, an electrolyte, and a separator. During a charging and discharging process of batteries, active ions are intercalated and de-intercalated back and forth between the positive electrode plate and the negative electrode plate. The electrolyte works as conducting ions between the positive electrode plate and the negative electrode plate. The separator is set between the positive electrode plate and the negative electrode plate, mainly for the purpose of preventing short circuits between the positive electrode plate and the negative electrode plate, and of allowing ions to pass through.

### Positive electrode plate

The positive electrode plate comprise a positive electrode current collector and a positive electrode active material layer disposed on at least one surface of the positive electrode current collector.

As an example, the positive electrode current collector has two opposite surfaces in its own thickness direction, and the positive electrode active material layer is disposed on either or both of the opposite surfaces of the positive electrode current collector.

In some embodiments of the present application, the positive electrode current collector may adopt a metal foil or a composite current collector. For example, as a metal foil, an aluminum foil can be used. The composite current collector can comprise a polymer material substrate and a metal layer formed on at least one surface of the polymer material substrate. Composite current collectors can be formed by forming metal materials of aluminum, aluminum alloys, nickel, nickel alloys, titanium, titanium alloys, silver, and silver alloys, etc. onto polymer material substrates such as polypropylene (PP), polyethylene terephthalate (PET), polybutylene terephthalate (PBT), polystyrene (PS), polyethylene (PE), and the like.

In some embodiments of the present application, the positive electrode active material can be a positive electrode active material commonly known in the art for batteries. As an example, the positive electrode active material can comprise at least one of lithium containing phosphates with an olivine structure, lithium transition metal oxides and their respective modified compounds. The present application, however, is not limited to these materials, and other traditional materials that can be used as a positive electrode active material for batteries can also be used. These positive electrode active materials can be used alone or in combination with two or more. Among them, examples of lithium transition metal oxides can include but are not limited to at least one of lithium cobalt oxide (such as LiCoO₂), lithium nickel oxide (such as LiNiO₂), lithium manganese oxide (such as LiMnO₂, LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811), lithium nickel cobalt aluminum oxide (such as LiNi_{0.85}Co_{0.15}Al_{0.05}O₂), and their modified compounds. Examples of lithium containing phosphates with an olivine structure may include, but are not limited to, at least one of lithium iron phosphate (such as LiFePO₄ (also referred to as LFP)), composites of lithium iron phosphate with carbon, lithium manganese phosphate (such as LiMnPO₄), composites of lithium manganese phosphate with carbon, lithium manganese iron phosphate, composites of lithium manganese iron phosphate with carbon.

In some embodiments of the present application, the positive electrode active material layer may optionally comprise a binder. As an example, the binder can comprise at least one of polyvinylidene fluoride (PVDF), polytetrafluoroethylene (PTFE), vinylidene fluoride tetrafluoroethylene-propylene terpolymer, vinylidene fluoride-hexafluoropropylene-tetrafluoroethylene terpolymer, tetrafluoroethylene-hexafluoropropylene copolymer and a fluoroacrylate resin.

In some embodiments of the present application, the positive electrode active material layer may optionally include a conductive agent. As an example, the conductive agent can comprise at least one of superconducting carbon, acetylene black, carbon black, Ketijen black, carbon dots, carbon nanotubes, graphene and carbon nanofibers.

In some embodiments of the present application, the positive electrode plate can be prepared by dispersing the above components used to prepare the positive electrode plate, such as positive electrode active materials, conductive agents, binders and any other components into a solvent (such as N-Methyl-2-pyrrolidone) to form a positive electrode slurry; and applying the positive electrode slurry on a positive electrode current collector, followed by drying, cold pressing, and other processes, thereby obtaining the positive electrode plate.

Negative electrode plate The negative electrode plate 10 provided in the present application comprises a negative electrode current collector 11 and a negative electrode active material layer 12, disposed on at least one surface of the negative electrode current collector 11, wherein, said negative electrode active substance layer 12 comprises, based on the total weight of said negative electrode active material layer 12,
90.0% to 98.6% by weight of a negative electrode active material;
1.0% - 5.0% by weight of a polymer binder; and
0.2%-4.0% by weight of a toughening fiber.

In the above embodiment, the negative electrode active material layer 12 contains an appropriate amount of polymer binder and an appropriate amount of toughening fiber, which are synergistic with each other to reduce cracking of the negative electrode plate 10, thus achieving the effect of improving flexibility of the negative electrode plate 10. At the same time, a combination of an appropriate amount of toughening fiber and an appropriate amount of polymer binder can make secondary batteries have a lower battery impedance, thus achieving the effect of improving energy density of the secondary batteries.

In embodiments of the present application, the negative electrode current collector 11 may adopt a metal foil or a composite current collector. For example, as a metal foil, a copper foil can be used. The composite current collector can comprise a polymer material substrate and a metal layer formed on at least one surface of the polymer material substrate. Composite current collectors can be formed by forming metal materials of copper, copper alloys, nickel, nickel alloys, titanium, titanium alloys, silver, and silver alloys, etc. onto polymer material substrates such as polypropylene (PP), polyethylene terephthalate (PET), polybutylene terephthalate (PBT), polystyrene (PS), polyethylene (PE), and the like. Moreover, the negative electrode current collector 11 has two opposite surfaces in its own thickness direction, and the negative electrode active material layer 12 is disposed on either or both of the opposite surfaces of the negative electrode current collector 11.

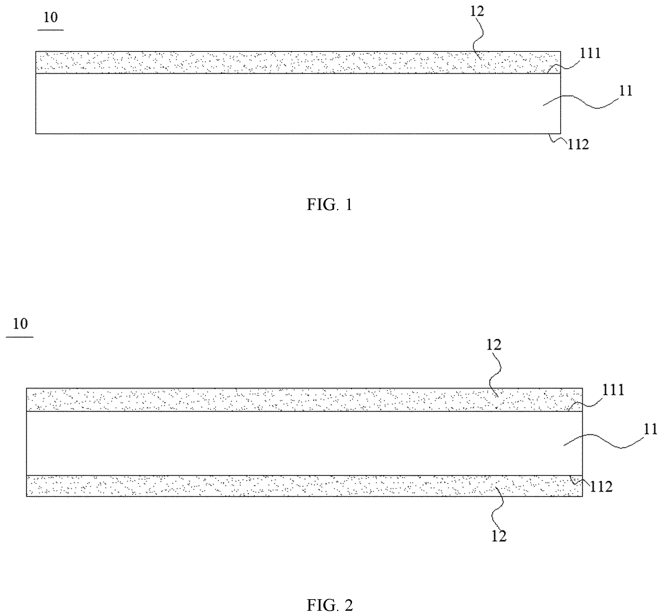

As an example, FIG. 1 schematically illustrates a negative electrode plate 10. Referring to FIG. 1, the negative electrode plate 10 comprises a negative electrode current collector 11 and a negative electrode active substance layer 1, as shown in FIG. 1, wherein the negative electrode current collector 11 has a first surface 111 and a second surface 112 oppositely in its thickness direction, and the negative electrode active material layer 12 is disposed on the first surface 111 and the second surface 112 of the negative electrode current collector 11.

As another example, FIG. 2 schematically illustrates another type of negative electrode plate 10. Referring to FIG. 2, the negative electrode plate 10 comprises a negative electrode current collector 11 and a negative electrode active material layer 12, wherein the negative electrode current collector 11 has a first surface 111 and a second surface 112 oppositely in its thickness direction, and the negative electrode active substance layer 12 is disposed on the first surface 111 of the negative electrode current collector 11. Of course, the negative electrode active material layer 12 can also be disposed on the second surface 112 of the negative electrode current collector 11.

The above negative electrode active material layer 12 is formed by applying a negative electrode slurry on the surface of the negative electrode current collector 11. The content of the negative electrode active material in the negative electrode active material layer 12 is set within the range of 90.0% to 98.6%, and there is no specific restrictions on the types of negative electrode active materials in the present application, which can be selected according to actual needs.

In some embodiments of the present application, the negative electrode active material may comprise at least one of artificial graphite, natural graphite, soft carbon, hard carbon, silicon based materials, tin based materials, lithium titanate, and the like. The silicon based material can be at least one selected from elemental silicon, silicon oxide compounds, silicon carbon composites, silicon nitrogen composites, and silicon alloys. The tin based material can be at least one selected from elemental tin, tin oxide compounds, and tin alloys. However, the present application is not limited to these materials, and other traditional materials that can be used as negative electrode active materials for batteries can also be used. These negative electrode active materials can be used alone or in combination with two or more.

In embodiments of the present application, the content of polymer binder is set within the range of 1.0% -5.0%, which can reduce cracking of the negative electrode plate 10 and reduce impedance of the secondary battery, thereby improving flexibility of the negative electrode plate 10 and increasing energy density of the secondary battery. If the content of polymer binder is less than 1.0%, the bonding effect of the polymer binder will be decreased, enabling the negative electrode active material layer 12 not to bond on the surface of the negative electrode current collector 11 well. In other words, the negative electrode active material layer 12 is prone to detachment from the surface of the negative electrode current collector 11, and cannot improve flexibility of the negative electrode plate 10. If the content of polymer binder is higher than 5.0%, it will hinder transmission of lithium ions among the negative electrode active material, making it difficult for lithium ions to deintercalate or intercalate, thereby increasing impedance of the secondary battery and affecting its rate performance.

As an example, the content of polymer binder can be, but is not limited to, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.0%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, or 5.0%.

In some embodiments of the present application, said polymer binder has a three-dimensional cross-linked network structure. The polymer binder with the three-dimensional cross-linked network structure has a better bonding property, which allows it to lock the negative electrode active material more effectively so that strength of the negative electrode plate 12 is enhanced and thus the negative electrode active material layer 12 is less prone to cracking during processing and use. And the toughening fibers can pass through gap among the negative electrode active material and intertwine with solid components such as the negative electrode active material and polymer binder, enabling the polymer binder to better synergize with the toughening fibers, further reducing cracking of the negative electrode plate 10, and thus enabling the negative electrode plate 10 to have good flexibility.

The three-dimensional cross-linked network structure of the above-mentioned polymer binder can be formed through interaction of functional groups within the polymer binder. In some embodiments of the present application, the polymer binder is a copolymer containing a plurality of polar functional groups. These polar functional groups can interact with each other to form hydrogen bonds, forming a three-dimensional cross-linked network structure within the polymer binder. And the formation of hydrogen bonds can enhance strength of the negative electrode active material layer, thereby making the negative electrode plate 10 less prone to cracking, further thereby improving flexibility of the negative electrode plate 10.

Furthermore, in some embodiments of the present application, the polar functional group of the polymer binder copolymer may comprise at least one of carboxyl, cyano, amide, amino, and hydroxyl groups. These polar functional groups are prone to form hydrogen bonds, which in turn makes it easier for the polymer binder to form a three-dimensional cross-linked network structure, thereby reducing cracking of the negative electrode plate 10 to improve its flexibility.

In addition, the polymer binder copolymer can further improve flexibility of the negative electrode plate 10 by adjusting its weight average molecular weight to enhance performances of the polymer. In some embodiments of the present application, the weight average molecular weight of the copolymer is greater than or equal to 300000, and the weight average molecular weight of copolymer can be measured by light scattering method, ultracentrifugation sedimentation rate method, gel chromatography and other methods. Setting the weight average molecular weight of copolymer within the range can help improve performances of the polymer binder, such as strength, tensile strength, and bonding force of three-dimensional cross-linked network structures.

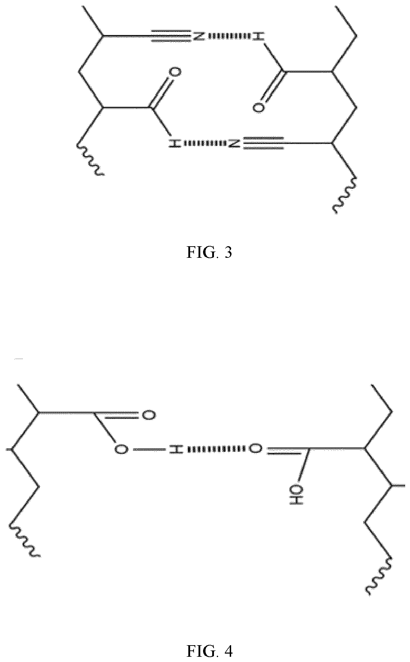

In some embodiments of the present application, the copolymer in the polymer binder can be at least one selected from polyacrylic acid-acrylonitrile copolymer and its derivatives, acrylic acid-acrylamide copolymer and its derivatives, and acrylic acid-acrylates copolymer. Among them, hydrogen bonds can be formed between the carboxyl and cyano groups in the polyacrylic acid-acrylonitrile copolymer (as shown in FIG. 3) and between the carboxyl groups in the acrylic acid-acrylates copolymer (as shown in FIG. 4). The strong intermolecular force formed by these hydrogen bonds can enhance strength of the negative electrode active material layer, making the negative electrode plate 10 less prone to cracking, thereby achieving the effect of improving flexibility of the negative electrode plate 10.

In embodiments of the present application, the content of toughening fibers in the negative electrode active material layer 12 is set within the range of 0.2% -4.0%, which can improve flexibility of the negative electrode plate 10 and increase its energy density by reducing impedance of the secondary battery. If the content of toughening fibers is less than 0.2%, the toughening fibers cannot intertwine with other solid components, thus failing to achieve the effect of improving flexibility of the negative electrode plate 10. If the content of toughening fibers is higher than 4.0%, they will hinder transmission of lithium ions between the negative electrode active materials, making it difficult for lithium ions to deintercalate/intercalate, thereby increasing impedance of the secondary battery and reducing energy density of the secondary battery.

As an example, the content of toughening fibers can be, but is not limited to, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.0%, 3.2%, 3.3%, 3.4%, 3.5%, 3.6%, 3.7%, 3.8%, 3.9%, or 4.0%.

In some embodiments of the present application, the toughening fiber can be one or two of a natural fiber or a synthetic fiber, as long as flexibility of the negative electrode plate 10 can be improved.

In some embodiments of the present application, a synthetic fiber are used as the toughening fiber. As an example, the synthetic fiber can be at least one selected from aramid fiber, plastic fiber and carbon fiber. These synthetic fibers can be synergistic with the polymer binder well, thereby reducing cracking of the negative electrode plate 10 and enabling the negative electrode plate 10 to have good flexibility.

As an example, aramid fibers can be any of or a mixture of para aramid fiber and meta aramid fiber; plastic fiber can be any of or a mixture of polyimide fiber, polyphenylene sulfide fiber, poly (p-phenylene benzobisoxazole) fiber and ultra-high molecular weight polyethylene fiber, in which the ultra-high molecular weight polyethylene fiber herein refers to fibers spun from polyethylene with a molecular weight in the range of 1,000,000 to and 5,000,000; carbon fiber can be any of or a mixture of polyacrylonitrile based carbon fiber, asphalt based carbon fiber and viscose based carbon fiber, and can also be carbon nanofibers or carbon nanotubes.

Furthermore, in some embodiments of the present application, the toughening fiber has a diameter in the range of 0.1µm to 50µm. The diameter of toughening fiber is setting in the range, which is conducive to further enhancement of flexibility of the negative electrode plate 10.

As an example, the diameter of the toughening fiber may be, but is not limited to, 0.1 µm, 0.2 µm, 0.3 µm, 0.4 µm, 0.5 µm, 0.6 µm, 0.7 µm, 0.8 µm, 0.9 µm, 1 µm, 2 µm, 3 µm, 4 µm, 5 µm, 6 µm, 7 µm, 8 µm, 9 µm, 10 µm, 11 µm, 12 µm m, 13µm, 14µm, 15µm, 16µm, 17µm, 18µm, 19µm, 20µm, 21µm, 22µm, 23µm, 24µm, 25µm, 26µm, 27µm, 28µm, 29µm, 30µm, 31µm, 32µm, 33µm, 34µm, 35µm, 37µm, 38µm, 39µ m, 40 µm, 41 µm, 42 µm, 43 µm, 44 µm, 45 µm, 46 µm, 47 µm, 48 µm, 49 µm, or 50 µm.

Further, the toughening fiber has an aspect ratio of greater than or equal to 20, where the aspect ratio is a ratio of length to diameter of the toughening fibers, and the length, diameter, and aspect ratio of the toughening fibers are determined by electron microscopy. The aspect ratio of the toughening fiber is greater than or equal to 20, which may also further enhance flexibility of the negative electrode plate 10.

As an example, the aspect ratio of the toughening fiber may be, but is not limited to, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, or more than 50.

In some embodiments of the present application, the negative electrode active material layer further comprises a conductive agent, and the conductive agent has a weight percentage of 0.2% to 1.0% in the negative electrode active material layer. As an example, the conductive agent is one or more of graphite, superconducting carbon, acetylene black, carbon black, Ketijen black, carbon dots, carbon nanotubes, graphene, and carbon nanofibers.

Further, the present application provides a method of manufacturing a negative electrode plate 10, the method comprising steps of:
mixing a negative electrode active material, a conductive agent, a polymer binder, a toughening fiber and a solvent in proportions described above to obtain a negative electrode slurry;
rolling the negative electrode slurry to form a negative electrode active material layer;
compounding the negative electrode active material layer with a negative electrode current collector and then drying and slitting it, to obtain a negative electrode plate.

In some embodiments of the present application, the negative electrode slurry is prepared by a preparation process specifically comprising steps of:
breaking a toughening fiber, and mixing the broken toughening fiber with a negative electrode active material and a conductive agent with stirring homogenously to obtain a mixed solid;
adding a polymer binder and a solvent to the mixed solid for mixing to obtain the negative electrode slurry.

Based on a general inventive concept, the present application provides a secondary battery comprising:
a positive electrode plate;
a negative electrode plate, said negative electrode plate being the negative electrode plate described in any of the above embodiments;
a separator, provided between said positive electrode plate and said negative electrode plate; and
an electrolyte.

In the above embodiment, the secondary battery comprises the negative electrode plate in the above embodiment, and by reasonably selecting components and their contents in the negative electrode active material layer is able to enhance not only flexibility of the negative electrode plate but also energy density of the secondary battery. Thus, the secondary battery has better strength as well as higher energy density.

### Separator

There is no particular limitation on the type of separator in the present application, and any well-known porous structured separator having good chemical and mechanical stability may be used.

In some embodiments of the present application, material of the separator may be at least one selected from glass fiber, nonwoven fabric, polyethylene, polypropylene, and polyvinylidene fluoride. The separator may be a single-layer film or a multi-layer composite film, without particular limitation. Where the separator is a multi-layer composite film, materials of each layers may be the same or different, with no particular limitation.

### Electrolyte

An electrolyte acts as a conductor of ions between a positive electrode plate and a negative electrode plate. There is no specific limitation on the type of electrolyte in the present application, which can be selected according to the needs. For example, the electrolyte may be liquid, gel, or all-solid.

In some embodiments of the present application, the electrolyte comprises an electrolyte salt and a solvent.

In some embodiments of the present application, the electrolyte salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroxalateborate, lithium dioxalateborate, lithium phosphate difluorodioxalate, and lithium phosphate tetrafluoroxalate.

In some embodiments of the present application, the solvent may be at least one selected from ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluorinated ethylene carbonate, methyl formate, methyl acetate, ethyl acetate, propyl acetate, methyl propionate, ethyl propionate, propyl propionate, methyl butyrate, ethyl butyrate , 1,4-butyrolactone, cyclobutane sulfone, dimethyl sulfone, methyl ethyl sulfone, and diethyl sulfone.

In some embodiments of the present application, the electrolyte may further optionally comprise an additive. For example, the additive may comprise negative electrode film forming additives, positive electrode film forming additives, and may further comprise additives that improve certain battery properties, such as additives that improve battery overcharge performance, additives that improve battery high or low temperature performances, and the like.

In some embodiments of the present application, the positive electrode plate, the negative electrode plate, and the separator may be made into an electrode assembly by a winding process or a laminating process. Specifically, the above positive electrode plate, separator, and negative electrode plate are stacked in order, so that the separator is sandwiched between the positive electrode plate and negative electrode plate for isolation, thereby obtaining a bare core, which assembly can be further wound to get a bare core; tabs are connected on the bare core, and then the battery core is placed into a packaging shell, then carried out heating to remove excess water, before injecting an electrolyte and sealing; finally, through standing, hot and cold pressing, formation, shaping and capacity testing and the other step, the secondary battery of the present application is obtained.

In some embodiments of the present application, the secondary battery may include an outer package. The outer package may be used to encapsulate said electrode assembly and electrolyte.

In some embodiments of the present application, the outer package of the secondary battery may be a hard case, such as a hard plastic case, an aluminum case, a steel case, and the like. The outer package of the secondary battery may also be a soft package, such as a pouch-type soft package. Material of the soft bag can be plastic. As plastic, polypropylene, polybutylene terephthalate, and polybutylene succinate can be given.

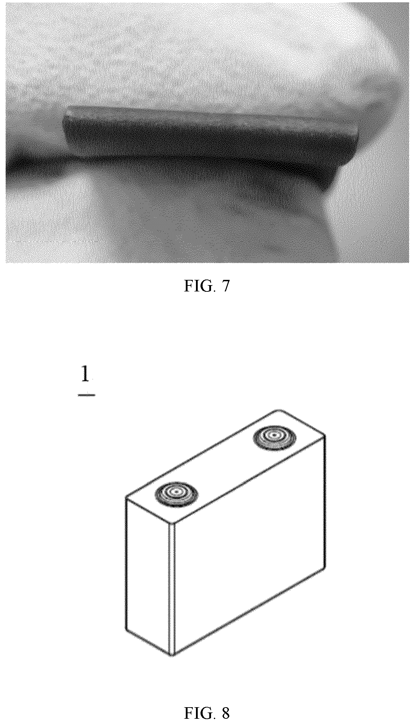

The shape of the secondary battery is not particularly limited in the present application, and it may be cylindrical, square, or any other shape. FIG. 8 is a schematic diagram of a secondary battery 1 of a square structure as an example.

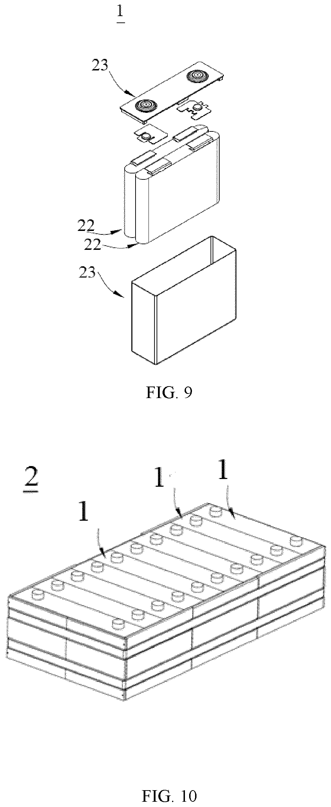

In some embodiments of the present application, as shown in FIG. 9, the outer package may include a casing 21 and a cover plate 23, wherein the casing 21 may include a bottom plate and side plates connected to the bottom plate, and the bottom plate and the side plates are enclosed to form an accommodating cavity. The casing 21 has an opening communicating with the accommodating cavity, and the cover plate 23 is used to cover the opening to close the accommodating cavity. A positive electrode plate, a negative electrode plate, and a separator may be made into an electrode assembly 22 by a winding process or a laminating process. The electrode assembly 22 is packaged in the accommodating cavity, and the electrolytic solution is infiltrated in the electrode assembly 22. The number of electrode assemblies 22 contained in the secondary battery 8 may be one or several, and may be adjusted according to requirements.

In some embodiments of the present application, the secondary batteries can be assembled into a battery module, and the number of secondary batteries contained in the battery module can be more than one, and the specific number can be adjusted according to application and capacity of the battery module.

FIG. 10 is a schematic diagram of the battery module 2 as an example. As shown in FIG. 10, in the battery module 2, a plurality of secondary batteries 1 may be arranged in sequence along the longitudinal direction of the battery module 2. Certainly, they can also be arranged in any other manner. Furthermore, a plurality of secondary batteries 1 can be fixed with fasteners.

Optionally, the battery module 2 may further include a housing having an accommodating space in which a plurality of secondary batteries 1 are accommodated.

In some embodiments of the present applciation, the above-mentioned battery modules can also be assembled into a battery pack, and the number of battery modules included in the battery pack can be one or more and the particular number can be adjusted according to the application and capacity of the battery pack.

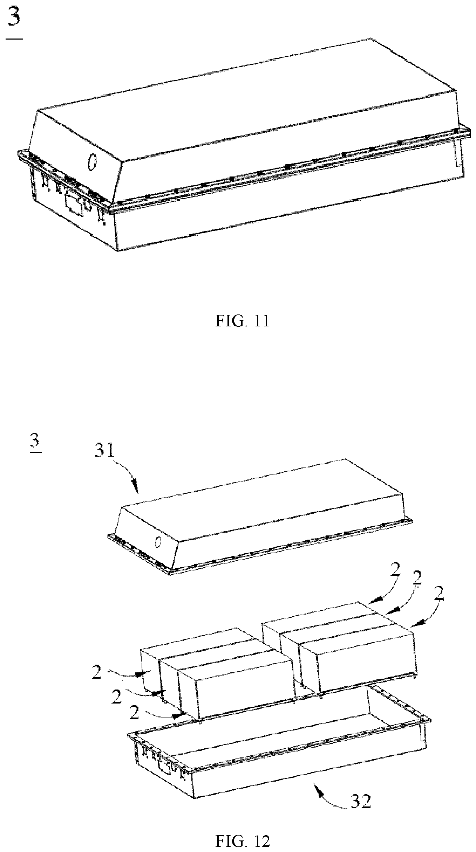

FIGS. 11 and 12 are schematic diagrams of the battery pack 3 as an example. As shown in FIGS. 11 and 12, the battery pack 3 may include a battery case and a plurality of battery modules 2 provided in the battery case. The battery case includes an upper case body 31 and a lower case body 32, and the upper case body 31 is used to cover the lower case body 32 to form a closed space for accommodating the battery modules 2. A plurality of battery modules 2 may be arranged in the battery case in any manner.

In addition, the present application further provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can comprise a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like, without being limited thereto.

The electrical device can select a secondary battery, a battery module or a battery pack according to its usage requirements.

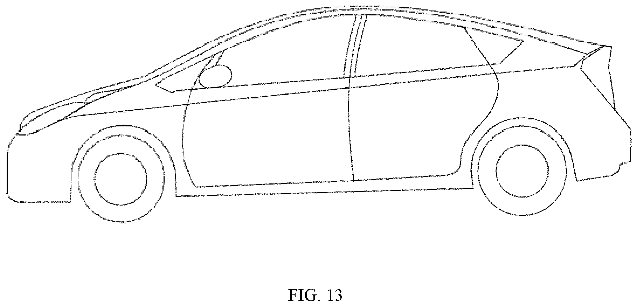

FIG. 13 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

### Example 1

### Preparation of negative electrode slurry

The raw material components for the negative electrode slurry were artificial graphite, carbon black, acrylic acid-acrylonitrile copolymer and para-aramid fiber, wherein the para-aramid fiber has a diameter of 0.5 µm and an aspect ratio of 40. The specific preparation steps for the negative electrode slurry were as follows:
(1) dispersing and breaking the para-aramid fiber with a high-speed shear;
(2) stirring the artificial graphite, carbon black and para-aramid fiber at a rate of 1000 rpm/min for 30 min, and then mixing them well to obtain a mixed solid;
(3) adding acrylic acid-acrylonitrile copolymer and deionized water to the mixed solid and kneading for 30 min to obtain a negative electrode slurry, wherein the negative electrode slurry had a solid content of 70%.

### Preparation of negative electrode plate

The negative electrode slurry was subjected to rolling by a roller press to obtain a negative electrode active material layer, wherein a weight ratio of the components in the negative electrode active material layer was 96.6:0.4:2:1, based on the total weight of the negative electrode active material layer, and the negative electrode active material layer was compounded with a copper foil, dried at 100°C in an oven and then slit to obtain a negative electrode plate.

### Preparation of positive electrode plate

Nickel-cobalt-manganese ternary material, carbon black, polyvinylidene fluoride, and N-methylpyrrolidone were mixed with stirring at a weight ratio of 67.34:28.86:2.7:1 to obtain a positive electrode slurry; then the positive electrode slurry was evenly applied to a positive electrode current collector; and then through drying, cold pressing, and slitting, a positive electrode plate was obtained.

### Preparation of electrolyte

In an argon atmosphere glove box (H₂O<0.1ppm, O₂<0.1ppm), organic solvents EC and EMC were mixed well according to a volume ratio of 3:7, and then 12.5% LiPF₆ lithium salt was added to dissolve in the organic solvents with stirring homogenously to obtain the electrolyte.

### Separator

A polypropylene film was used as a separator.

Preparation of secondary battery

The positive electrode plate, separator, and negative electrode plate were stacked in order, so that the separator was sandwiched between the positive electrode plate and negative electrode plate for isolation, which assembly was wound to get a bare core; tabs were connected on the bare core, and then the battery core was placed into an aluminum shell, then carried out baking at 80°C to remove water, before injecting an electrolyte and sealing; finally, through standing, hot and cold pressing, formation, shaping and capacity testing and the other steps, the secondary battery of the present example was obtained.

### Example 2

Example 2 was the same as Example 1, with the exception that a weight ratio of artificial graphite : carbon black : acrylic acid-acrylonitrile copolymer : para-aramid fiber in the negative electrode active material layer was 98.6:0.2:1:0.2.

### Example 3

Example 3 was the same as Example 1, with the exception that a weight ratio of artificial graphite : carbon black : acrylic acid-acrylonitrile copolymer : para-aramid fiber in the negative electrode active material layer was 90:1:5:4.

### Example 4

Example 4 was the same as Example 1, with the exception that a weight ratio of artificial graphite : carbon black : acrylic acid-acrylonitrile copolymer : para-aramid fiber in the negative electrode active material layer was 96.1:0.4:1.5:2.

### Example 5

Example 5 was the same as Example 1, with the exception that a weight ratio of artificial graphite : carbon black : acrylic acid-acrylonitrile copolymer : para-aramid fiber in the negative electrode active material layer was 96:0.4:3:0.6.

### Example 6

Example 6 was the same as Example 1, with the exception that a weight ratio of artificial graphite : carbon black : acrylic acid-acrylamide copolymer : para-aramid fiber in the negative electrode active material layer was 96.6:0.4:2:1.

### Example 7

Example 7 was the same as Example 1, with the exception that a weight ratio of artificial graphite : carbon black : acrylic acid-acrylates copolymer : para-aramid fiber in the negative electrode active material layer was 96.6:0.4:2:1.

### Example 8

Example 8 was the same as Example 1, with the exception that a weight ratio of artificial graphite : carbon black : acrylic acid-acrylonitrile copolymer : polyacrylonitrile based carbon fiber in the negative electrode active material layer was 96.6:0.4:2:1.

### Example 9

Example 9 was the same as Example 1, with the exception that a weight ratio of artificial graphite : carbon black : acrylic acid-acrylonitrile copolymer : asphalt based carbon fiber in the negative electrode active material layer was 96.6:0.4:2:1.

### Example 10

Example 10 was the same as Example 1, with the exception that a weight ratio of artificial graphite : carbon black : acrylic acid-acrylonitrile copolymer : viscose based carbon fiber in the negative electrode active material layer was 96.6:0.4:2:1.

### Example 11

Example 11 was the same as Example 1, with the exception that a weight ratio of artificial graphite : carbon black : acrylic acid-acrylates copolymer : polyimide fiber in the negative electrode active material layer was 96.6:0.4:2:1.

### Example 12

Example 12 was the same as Example 1, with the exception that a weight ratio of artificial graphite : carbon black : acrylic acid-acrylonitrile copolymer : polyphenylene sulfide fiber in the negative electrode active material layer was 96.6:0.4:2:1.

### Example 13

Example 13 was the same as Example 1, with the exception that a weight ratio of artificial graphite : carbon black : acrylic acid-acrylonitrile copolymer : poly(p-phenylene benzobisoxazole) fiber in the negative electrode active material layer was 96.6:0.4:2:1.

### Example 14

Example 14 was the same as Example 1, with the exception that a weight ratio of artificial graphite : carbon black : acrylic acid-acrylonitrile copolymer : ultra-high molecule weight polyethylene fiber in the negative electrode active material layer was 96.6:0.4:2:1.

### Comparative Example 1

Comparative Example 1 was the same as Example 1, with the exception that artificial graphite, carbon black, SBR (binder), sodium hydroxymethylcellulose (thickener) and para-aramid fiber in the negative electrode active material layer were dissolved in deionized water at a weight ratio of 96.6:0.4:0.8:1.2:1, and mixed well to obtain a negative electrode slurry; and the negative electrode slurry was evenly applied to a copper foil, and then through drying, cold pressing and slitting processes, the negative electrode plate was obtained.

### Comparative Example 2

Comparative example 2 was the same as Example 1, with the exception that a weight ratio of artificial graphite : carbon black : acrylic acid-acrylonitrile copolymer in the negative electrode active material layer was 97.6:0.4:2.

### Comparative Example 3

Comparative Example 3 was the same as Example 1, with the exception that a weight ratio of artificial graphite : carbon black : acrylic acid-acrylonitrile copolymer : para-aramid fiber in the negative electrode active material layer was 98.1:0.4:0.5:1.

### Comparative Example 4

Comparative Example 4 was the same as Example 1, with the exception that a weight ratio of artificial graphite : carbon black : acrylic acid-acrylonitrile copolymer : para-aramid fiber in the negative electrode active material layer was 97.5:0.4:2.0:0.1.

### Comparative Example 5

Comparative Example 5 was the same as Example 1, with the exception that a weight ratio of artificial graphite : carbon black : acrylic acid-acrylonitrile copolymer : para-aramid fiber in the negative electrode active material layer was 87.6:0.4:2.0: 10.

### Comparative Example 6

Comparative Example 6 was the same as Example 1, with the exception that a weight ratio of artificial graphite : carbon black : acrylic acid-acrylonitrile copolymer : para-aramid fiber in the negative electrode active material layer was 88.6:0.4:10: 1.

### Test section

### (1) Flexibility of negative electrode plate

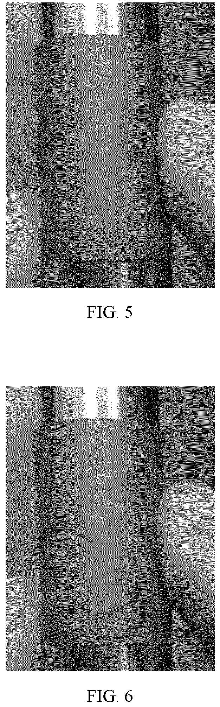

The (230mg/1540mm²) negative electrode plate was wrapped and affixed to rolled needles with different diameters to observe whether there were cracks, which can be referred to Fig. 5 and Fig. 6. The test results were shown in Table 2.

### (2) Tensile of the negative electrode active material layer

The Instron metal tensile tester was used for the testing, comprising the specific steps of: taking a negative electrode slurry to be tested and forming a negative electrode active material layer by rolling, then cutting it into a test sample with a length of 100 mm, a width of 20 mm and a thickness of 1 mm, and testing a tensile strength (Rm) of the sample by stretching it with a tensile tester at 2 mm/min. The test results were shown in Table 2.

### (3) DC impedance of secondary battery

The secondary battery was charged to 4.3V at a constant current of 1/3C at 25°C, then was charged to a current of 0.05C at a constant voltage of 4.3V, which was allowed to be set standing for 5min, and then was discharged it for 25s at 1/3C, thereby adjusting the state of charge (SOC) of the secondary battery to 90%;

The secondary battery with 90% SOC was allowed to be set standing for 60min and then discharged at 3C for 30s to complete a 30s discharge DC internal resistance test at 90% SOC. 1/3C discharge time was controlled, so as to obtain a 30s discharge DC internal resistance of the secondary battery at 50% SOC. The test results were shown in Table 2.

The weight ratio of each components in the negative electrode active material layer of Examples 1-14 and Comparative Example 1-6 were shown in Table 1, and the test results of negative electrode plates and secondary batteries of Examples 1-14 and Comparative Example 1-6 were shown in Table 2.

**Table 1**

| | Negative electrode active material | Conductive agent | Polymer binder | Toughening fiber | Thickener | Toughening fiber | |
|---|---|---|---|---|---|---|---|
| | | | | | | Diameter | Aspect ratio |
| Example 1 | artificial graphite, 96.6 | carbon black, 0.4 | acrylic acid-acrylonitrile copolymer, 2 | para-aramid fiber, 1 | 0 | 0.5µm | 40 |
| Example 2 | artificial graphite, 98.6 | carbon black, 0.2 | acrylic acid-acrylonitrile copolymer, 1 | para-aramid fiber, 0.2 | 0 | 0.5µm | 40 |
| Example 3 | artificial graphite, 90 | carbon black, 1 | acrylic acid-acrylonitrile copolymer, 5 | para-aramid fiber, 4 | 0 | 0.5µm | 40 |
| Example 4 | artificial graphite, 96.1 | carbon black, 0.4 | acrylic acid-acrylonitrile copolymer, 1.5 | para-aramid fiber, 2 | 0 | 0.5µm | 40 |
| Example 5 | artificial graphite, 96 | carbon black, 0.4 | acrylic acid-acrylonitrile copolymer, 3 | para-aramid fiber, 0.6 | 0 | 0.5µm | 40 |
| Example 6 | artificial graphite, 96.6 | carbon black, 0.4 | acrylic acid-acrylamide, 2 | para-aramid fiber, 1 | 0 | 0.5µm | 40 |
| Example 7 | artificial graphite, 96.6 | carbon black, 0.4 | acrylic acid-acrylates copolymer, 2 | para-aramid fiber, 1 | 0 | 0.5µm | 40 |
| Example 11 | artificial graphite, 96.6 | carbon black, 0.4 | acrylic acid-acrylonitrile copolymer, 2 | Polyimide fiber, 1 | 0 | 0.5µm | 40 |
| Example 12 | artificial graphite, 96.6 | carbon black, 0.4 | acrylic acid-acrylonitrile copolymer, 2 | Polypphenylene sulfide fiber, 1 | 0 | 0.5µm | 40 |
| Example 13 | artificial graphite, 96.6 | carbon black, 0.4 | acrylic acid-acrylonitrile copolymer, 2 | Poly(p-phenylene benzobisoxazole) fiber, 1 | 0 | 0.5µm | 40 |
| Example 14 | artificial graphite, 96.6 | carbon black, 0.4 | acrylic acid-acrylonitrile copolymer, 2 | Ultra-high molecule weight polyethylene fiber, 1 | 0 | 0.5µm | 40 |
| Comparative Example1 | artificial graphite, 96.6 | carbon black, 0.4 | styrene butadiene rubber, 0.8 | para-aramid fiber, 1 | sodium hydroxylmeth yl cellulose, 1.2 | 0.5µm | 40 |
| Comparative Example2 | artificial graphite, 97.6 | carbon black, 0.4 | acrylic acid-acrylonitrile copolymer, 2 | 0 | 0 | 0 | 0 |
| Comparative Examples | artificial graphite, 98.1 | carbon black, 0.4 | acrylic acid-acrylonitrile copolymer, 0.5 | para-aramid fiber, 1 | 0 | 0.5µm | 40 |
| Comparative Example4 | artificial graphite, 97.5 | carbon black, 0.4 | acrylic acid-acrylonitrile copolymer, 2 | para-aramid fiber, 0.1 | 0 | 0.5µm | 40 |
| Comparative Examples | artificial graphite, 87.6 | carbon black, 0.4 | acrylic acid-acrylonitrile copolymer, 1 | para-aramid fiber, 10 | 0 | 0.5µm | 40 |
| Comparative Example6 | artificial graphite, 88.6 | carbon black, 0.4 | acrylic acid-acrylonitrile copolymer, 10 | para-aramid fiber, 1 | 0 | 0.5µm | 40 |

Note also: In Table 1, the ratio of each component in the negative electrode active material layer, is in %, based on the total weight of the negative electrode active material layer.

**Table 2**

| | Flexibity | | | | | | | | Rm | DCR |
|---|---|---|---|---|---|---|---|---|---|---|
| | 48mm | 32mm | 24mm | 16mm | 12mm | 8mm | 4mm | 2mm | | |
| Example 1 | No cracking | No cracking | No cracking | No cracking | No cracking | Cracking | Cracking | Cracking | 0.38 | 544.8 |
| Example 2 | No cracking | No cracking | Cracking | Cracking | Cracking | Cracking | Cracking | Cracking | 0.15 | 544.2 |
| Example 3 | No cracking | No cracking | No cracking | No cracking | No cracking | No cracking | No cracking | No cracking | 0.56 | 548.4 |
| Example 4 | No cracking | No cracking | No cracking | No cracking | Cracking | Cracking | Cracking | Cracking | 0.29 | 545.2 |
| Example 5 | No cracking | No cracking | No cracking | No cracking | Cracking | Cracking | Cracking | Cracking | 0.47 | 544.4 |
| Example 6 | No cracking | No cracking | Cracking | Cracking | Cracking | Cracking | Cracking | Cracking | 0.12 | 544.9 |
| Example 7 | No cracking | No cracking | Cracking | Cracking | Cracking | Cracking | Cracking | Cracking | 0.08 | 544.6 |
| Example 8 | No cracking | No cracking | No cracking | Cracking | Cracking | Cracking | Cracking | Cracking | 0.20 | 544.3 |
| Example 9 | No cracking | No cracking | No cracking | Cracking | Cracking | Cracking | Cracking | Cracking | 0.31 | 544.2 |
| Example 10 | No cracking | No cracking | No cracking | Cracking | Cracking | Cracking | Cracking | Cracking | 0.32 | 544.5 |
| Example 11 | No cracking | No cracking | No cracking | No cracking | Cracking | Cracking | Cracking | Cracking | 0.33 | 545.6 |
| Example 12 | No cracking | No cracking | No cracking | Cracking | Cracking | Cracking | Cracking | Cracking | 0.24 | 545.3 |
| Example 13 | No cracking | No cracking | Cracking | Cracking | Cracking | Cracking | Cracking | Cracking | 0.28 | 545.8 |
| Example 14 | No cracking | No cracking | No cracking | Cracking | Cracking | Cracking | Cracking | Cracking | 0.26 | 545.4 |
| Comparative Example 1 | No cracking | Cracking | Cracking | Cracking | Cracking | Cracking | Cracking | Cracking | 0.02 | 545.3 |
| Comparative Example 2 | No cracking | Cracking | Cracking | Cracking | Cracking | Cracking | Cracking | Cracking | 0.30 | 544.5 |
| Comparative Example 3 | Cracking | Cracking | Cracking | Cracking | Cracking | Cracking | Cracking | Cracking | 0.05 | 547.3 |
| Comparative Example 4 | No cracking | Cracking | Cracking | Cracking | Cracking | Cracking | Cracking | Cracking | 0.31 | 545.7 |
| Comparative Example 5 | No cracking | No cracking | No cracking | No cracking | No cracking | No cracking | No cracking | No cracking | 0.42 | 563.5 |
| Comparative Example 6 | No cracking | No cracking | No cracking | No cracking | No cracking | No cracking | No cracking | No cracking | 0.63 | 558.7 |

| | | | | | | | | | | |
|---|---|---|---|---|---|---|---|---|---|---|
| Note: Rm is in MPa; DCR is in mQ. | | | | | | | | | | |

From the test results in Table 2, it can be seen that the negative electrode plates prepared by Examples 1-14 have good flexibility while reducing DC impedance of secondary batteries to enhance their energy density.

It can be seen from Example 1 and Comparative Examples 1-4, the negative electrode slurry for the negative electrode active material layer contains an appropriate amount of polymer binder and an appropriate amount of toughening fiber, which synergize with each other to reduce cracking of the negative electrode plate, thereby achieving the effect of enhancing flexibility of the negative electrode plate.

It can be seen from Example 1 and Comparative Examples 5-6, the negative electrode slurry for the negative electrode active material layer contains an appropriate amount of toughening fiber and an appropriate amount of polymer binder, which enables the secondary battery to have a lower impedance, thereby achieving the effect of enhancing energy density of the secondary battery.

Although the present application has been described with reference to preferred embodiments, various improvements can be made thereto and components thereof can be replaced with equivalents without departing from the scope of the present application. In particular, various technical features mentioned in various embodiments can be combined in any manner, provided that there is no structural conflict. The present application is not limited to the particular embodiments disclosed in the text, but includes all embodiments that fall within the scope of the claims.

## Claims

1. A negative electrode plate, comprising:
a negative electrode current collector;
a negative electrode active material layer, disposed on at least one surface of the negative electrode current collector,
wherein the negative electrode active material layer comprises, based on total weight of the negative electrode active material layer,
90.0% to 98.6% by weight of a negative electrode active material;
1.0% - 5.0% by weight of a polymer binder;
0.2%-4.0% by weight of a toughening fiber.

2. The negative electrode plate according to claim 1, wherein the polymer binder has a three-dimensional cross-linked network structure.

3. The negative electrode plate according to claim 1 or 2, wherein the polymer binder is a copolymer containing a plurality of polar functional groups.

4. The negative electrode plate according to claim 3, wherein the polar functional group comprises at least one of a carboxyl group, a cyano group, an amide group, an amino group and a hydroxyl group.

5. The negative electrode plate according to claim 3 or 4, wherein the copolymer has a weight average molecular weight of greater than or equal to 300000.

6. The negative electrode plate according to any one of claims 3-5, wherein the copolymer is at least one selected from polyacrylic acid-acrylonitrile copolymer and derivatives thereof, acrylic acid-acrylamide and derivatives thereof, and acrylic acid-acrylates copolymer and derivatives thereof.

7. The negative electrode plate according to any one of claims 1-6, wherein the toughening fiber has a diameter in the range of 0.1 µm-50 µm and an aspect ratio of greater than or equal to 20.

8. The negative electrode plate according to any one of claims 1-7, wherein the toughening fiber is at least one selected from aramid fibers, plastic fibers and carbon fibers.

9. The negative electrode plate according to claim 8, wherein the plastic fibers are one or more selected from polyimide fibers, polyphenylene sulfide fibers, poly(p-phenylene benzobisoxazole) fibers and ultra-high molecular weight polyethylene fibers; and
the carbon fibers are one or more selected from polyacrylonitrile-based carbon fibers, asphalt-based carbon fibers and viscose based carbon fibers.

10. A secondary battery, comprising:
a positive electrode plate;
a negative electrode plate, the negative electrode plate being the negative electrode plate of any one of claims 1-9;
a separator, disposed between the positive electrode plate and the negative electrode plate; and
an electrolyte.

11. A battery module, the battery module comprising the secondary battery as claimed in claim 10.

12. A battery pack, the battery pack comprising the battery module as claimed in claim 11.

13. An electrical device, comprising the secondary battery as claimed in claim 10, the battery module as claimed in claim 11, or the battery pack as claimed in claim 12.
